# EUROPEAN PATENT SPECIFICATION

(11) **EP 3 940 322 B1**
(45) Date of publication and mention of the grant of the patent: **04.03.2026**
(21) Application number: 19919216.2
(22) Date of filing: 10.09.2019
(51) Int. Cl.: F25D 23/02, F25D 29/00, H04N 23/55, H04N 23/57

(54) **REFRIGERATOR DOOR BODY AND REFRIGERATOR HAVING SAME**
KÜHLSCHRANKTÜRKÖRPER UND KÜHLSCHRANK DAMIT
CORPS DE PORTE DE RÉFRIGÉRATEUR ET RÉFRIGÉRATEUR LE COMPORTANT

(30) Priority: 13.03.2019 CN 201910187404
(43) Date of publication of application: 19.01.2022
(73) Proprietor: QINGDAO HAIER REFRIGERATOR CO., LTD., Qingdao, Shandong 266101 (CN); HAIER SMART HOME CO., LTD., Qingdao, Shandong 266101 (CN)
(72) Inventor: LIU, Mingyong, Qingdao, Shandong 266101 (CN); ZHANG, Heng, Qingdao, Shandong 266101 (CN); WANG, Ning, Qingdao, Shandong 266101 (CN); FU, Weijian, Qingdao, Shandong 266101 (CN); WANG, Yuan, Qingdao, Shandong 266101 (CN); ZHANG, Kai, Qingdao, Shandong 266101 (CN)
(74) Representative: Winter, Brandl - Partnerschaft mbB
(86) International application number: PCT/CN2019/105079
(87) International publication number: WO 2020/181749

(56) References cited:
- CN-A- 106 568 261
- CN-A- 107 120 500
- CN-A- 107 120 500
- CN-A- 107 270 605
- CN-U- 204 963 414
- JP-A- 2002 323 858
- JP-A- 2002 323 858
- JP-A- 2003 042 626
- KR-A- 20050 078 301
- US-A1- 2018 335 252
- US-B2- 9 920 979

## Description

### TECHNICAL FIELD

The present invention relates to the field of household appliances, and specifically to a refrigerator door body and a refrigerator having same.

### BACKGROUND

With rapid development of artificial intelligence, the Internet of Things and big data, intelligence has become the first preference and focus of concerns in the industry of refrigerators, and the boundary of the industry of intelligent refrigerators will be further broken through in the future. A facial recognition function is a basic function of a conventional intelligent refrigerator. When a person gets close to a certain distance from the refrigerator, a camera will be triggered to recognize the person's face and thereby control the refrigerator to operate accordingly.

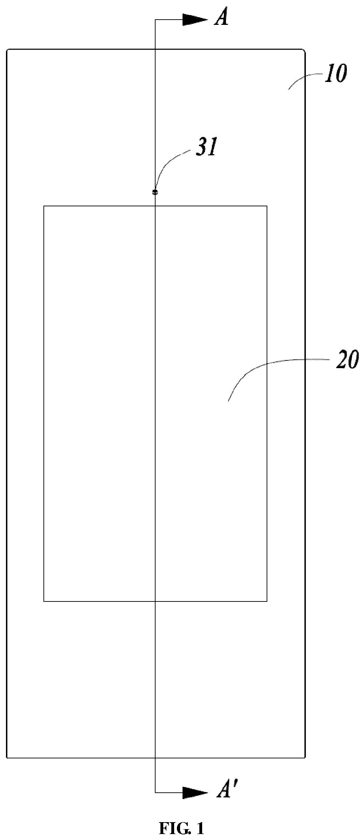

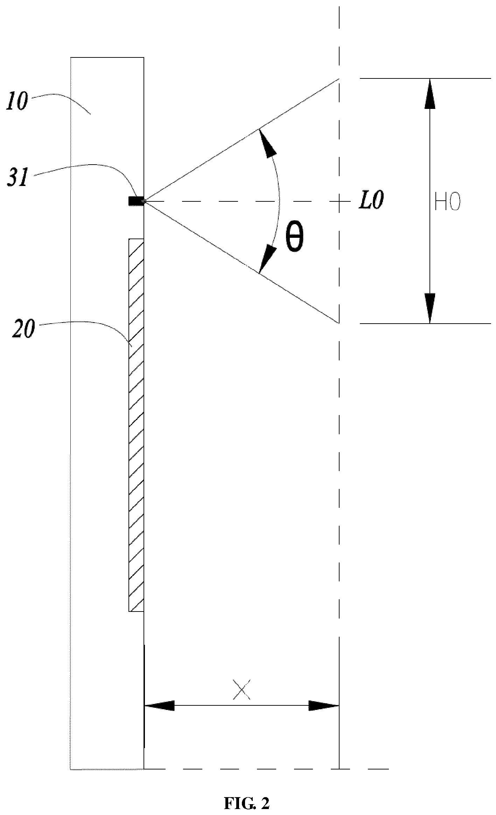

Referring to FIG. 1, a door body of an intelligent refrigerator usually comprises a main body 10, a display panel 20 and a camera 31 fixed on the main body 10. Reference needs to be made to an average height of users to set the height of the display panel 20; the camera 31 is disposed above the display panel 20, and usually located at a larger height. In the prior art, as shown in FIG. 2, an optical axis L0 of the camera 31 on the door body is usually in a horizontal state. When the camera 31 recognizes the person's face in front of the door body, a recognition range H0 of the camera depends on the mounting height of the camera 31, a field-of-view angle θ of the camera 31 and a distance X between the person and the door body. The prior art has the following problems: faces of partial users who are short cannot fall within the recognition range H0 of the camera 31, and therefore cannot be recognized.

CN107120500A discloses a mount for a camera assembly and a refrigerator, wherein the mount for the camera assembly comprises: a base and a bracket, wherein the base is mounted on an upper side of the refrigerator; the bracket is fixedly connected to said base; said bracket has a rear-facing mounting surface, said mounting surface being set forwardly inclined from bottom to top, said camera assembly being mounted on the rear side of said mounting surface, said mounting surface corresponding to said camera said bracket further comprising a stopper and a snap-on member provided on said mounting surface, said stopper and snap-on member being disposed along said mounting surface on both sides of said circuit board and being limited against two opposite sides of said circuit board.

JP2002323858A discloses a home electrical appliance with an information display apparatus and the apparatus for a movement of an information display apparatus which can display various information. The information display apparatus is related with the home electrical appliance with an information display apparatus and the apparatus for a movement of an information display apparatus which can display information in the aspect match combined with those who operate.

CN106568261A discloses a method and a refrigerator for manipulating the rotation angle of a refrigerator display by means of a predetermined algorithm, said method comprising the steps of: receiving a sound source; pairing said sound source with a predetermined sound source library and controlling said display to rotate to the left or to the right if said sound source is an adult sound source and to rotate said display downwards if said sound source is a child sound source. An embodiment of the present invention can confirm the user's identity by means of a microphone and rotate the display in different directions depending on the user's identity.

In view of the above, it is necessary to provide an improved technical solution to the above problems.

### SUMMARY

The present invention aims to at least solve technical problems existing in the prior art. To achieve the above object of invention, the present invention provides a refrigerator door body and a refrigerator having same, which are specifically designed in the following manner.

According to the invention, a refrigerator door body according to claim 1 is provided. The dependent claims set out particular embodiments of the invention.

The present invention has the following advantages: based on the installation mode of the camera on the refrigerator door body according to the present invention, the recognition range of the camera may be increased in a specific refrigerator application scenario relative to the prior art, so that the camera is more suitable for face recognition of users of different heights.

### BRIEF DESCRIPTION OF THE DRAWINGS

Figures to be used in describing embodiments or the prior art will be briefly introduced to more clearly illustrate technical solutions in embodiments of the present invention or prior art. Obviously, the figures in the following description are only embodiments of the present invention. Those having ordinary skill in the art may also obtain other figures according to the provided figures without making any inventive efforts.
FIG. 1 shows a front view of a refrigerator door body;
FIG. 2 shows a cross-sectional view taken along line A-A' of FIG. 1;
FIG. 3 shows a cross-sectional view of the refrigerator door body in the present invention;
FIG. 4 shows an assembly diagram of a camera and a mounting base in the present invention;
FIG. 5 shows an exploded view of the structure shown in FIG. 4;
FIG. 6 shows a cross-sectional view of the mounting base.

### DETAILED DESCRIPTION

The technical solutions in embodiments of the present invention will be clearly and completely described below with reference to the figures in the embodiments of the present invention.

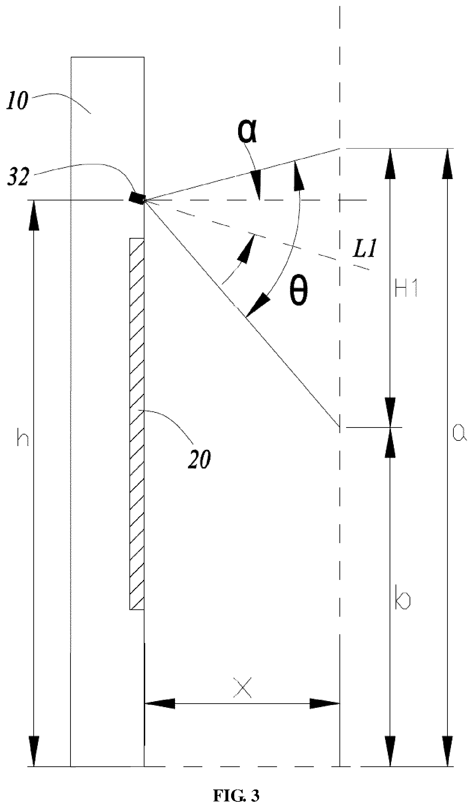

As shown in FIG. 3, the refrigerator door body in the present invention comprises a main body 10 and a camera 32 mounted on the main body 10 and configured to obtain an image in front of the main body 10. In the present invention, an extension direction of an optical axis L1 of the camera 32 at the front side of the main body 10 is downwardly inclined relative to a horizontal direction.

The present invention further provides a refrigerator. The refrigerator comprises a cabinet (not shown in the figure) and a refrigerator door body. During specific implementation, the refrigerator door body is hinged to a front side of the cabinet through a hinge. During practical application, the image captured by the camera 32 is usually a facial image of the user in front of the refrigerator.

Referring to FIG. 3, in the present invention, the extension direction of the optical axis L1 of the camera 32 at the front side of the main body 10 is downwardly inclined relative to the horizontal direction by an angle α, the field-of-view angle of the camera 32 is θ, and the mounting height of the camera 32 is h, and the distance between the user and the door body is X.

It may be known from calculation that an upper limit of recognition of the camera 32 a=h+X*tan(θ/2-α), and a lower limit of recognition of the camera 32 b=h-X*tan(θ/2+α). It may be further obtained that the recognition range H1 of the camera 32 is H1=a-b=X*[tan(θ/2-α)+tan(θ/2+α)].

Based on the above equation of the recognition range H1 of the camera 32, it is easier to understand that if α<θ/2<90°, H1 has a minimum value when α=0. That is, when the extension direction of the optical axis L1 of the camera 32 at the front side of the main body 10 is in a horizontal state (namely, the prior art as shown in FIG. 2), the recognition range H1 of the camera 32 is the smallest. Therefore, it can be seen that the arrangement of the camera 32 in the present invention can increase the recognition range of the camera 32, and thus can better adapt to face recognition of users of different heights.

In addition, referring to FIG. 3, since the extension direction of the optical axis L1 of the camera 32 at the front side of the main body 10 is downwardly inclined relative to the horizontal direction, the lower limit b of recognition of the camera 32 may be made have a smaller value, thereby achieving facial recognition for short users. It may be appreciated that in a specific scenario of application to the refrigerator, the camera 32 is usually disposed at an upper end of the refrigerator, i.e., h usually has a large value, e.g., the range of h is 1.6m-1.8m. As such, whilst the lower limit b of recognition of the camera 32 is lowered, recognition of taller users' faces will not be substantially affected.

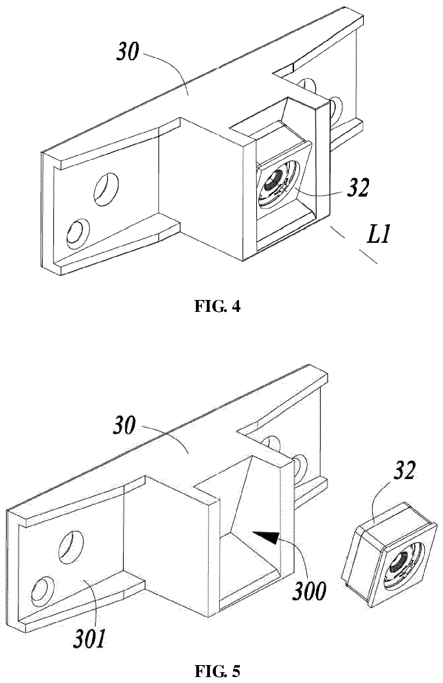

In the present invention, referring to FIG. 4, the refrigerator door body further comprises a mounting base 30 provided on the main body 10. The mounting base 30 has a mounting portion for mounting the camera 32 and defining the extension direction of the optical axis L1 of the camera 32.

With reference to FIG. 5, the mounting portion is a receiving groove 300 that receives the camera 32 and exposes a front surface of the camera 32, and the receiving groove 300 is arranged fixedly relative to the main body 10. Specifically, the mounting base 300 in the present embodiment has a connecting portion 301 fixed to the main body 10, and the connecting portion 301 is provided with a through hole and fixed to the main body 10 by screws.

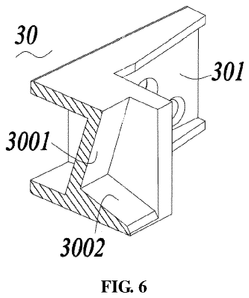

An inner wall of the receiving groove 300 has a portion that is in close contact with at least part of an outer wall of the camera 32 to define the extension direction of the optical axis L1 of the camera 32. Referring to FIG. 5, the camera 32 is a rectangular parallelepiped, and the inner wall of the receiving groove 300 has a portion that is in close contact with a back surface and a bottom surface of the camera 32. As shown in FIG. 6, the inner wall of the receiving groove 300 has a rear wall 3001 and a bottom wall 3002 which are arranged inclined, the rear wall 3001 is perpendicular to the bottom wall 3002, and the rear wall 3001 and the bottom wall 3002 are in close contact with the back surface and bottom surface of the camera 32, respectively. In this way, the control of the inclination degree of the extension direction of the optical axis L1 of the camera 32 may be achieved by adjusting the inclination degree of the rear wall 3001 and bottom wall 3002.

In the present embodiment, the rear wall 3001 of the receiving groove 300 further has a function of limiting a front-rear position of the camera 32; the bottom wall 3002 of the receiving groove 300 further has a function of limiting an up-down position of the camera 32.

In other embodiments of the present invention, the inner wall of the receiving groove 300 may also only have a portion in close contact with the back surface of the camera 32 or only have a portion in close contact with the bottom surface of the camera 32. Details will not be presented here.

In the specific implementation process, the inner wall of the receiving groove 300 further has a portion which is in close contact with a left side wall and a right side wall of the camera 32, and which has a function of limiting a left-right position of the camera 32. In the present embodiment, the rear wall 3001, the bottom wall 3002 and the portion in close contact with the left side wall and the right side wall of the camera 32 jointly enclose the receiving groove 300.

It can be appreciated that in other examples not part of the present invention, the shape of the camera 32 is not limited to a rectangular parallelepiped; correspondingly, the receiving groove 300 also has an inner wall matching the shape of the camera 32, which is not described in detail any more here.

The camera 32 is fixed to the inner wall of the receiving groove 300 in an adhesive manner to achieve the fixation of the camera 32. In the specific implementation process, glue or double-sided adhesive tape may be used as an adhesive medium.

As a preferred embodiment of the present invention, the angle by which the extension direction of the optical axis L1 of the camera 32 at the front side of the main body 10 is downwardly inclined relative to the horizontal direction is in a range of 10-20°.

The angle α by which the extension direction of the optical axis L1 of the camera 32 at the front side of the main body 10 is downwardly inclined relative to the horizontal direction is adjustable. Specifically, the camera 32 is disposed rotatable relative to the main body 10. The mounting base 30 comprises a fixed frame (not shown) fixedly connected to the main body 10 and a rotatable frame (not shown) rotatably connected to the fixed frame, the mounting portion of the mounting base 30 is located on the rotatable frame, and the camera 32 is fixed to the rotatable frame via the mounting portion. As such, when the rotatable frame rotates, the inclination angle α may be adjusted. In the specific implementation process, the control of the rotation of the rotatable frame may be realized by a mechanism such as a micro motor.

In addition, as shown in FIG. 3, the door body in the present embodiment further has a display panel 20 fixed on the front side of the main body 10, and the mounting height of the camera 32 is not lower than the mounting height of the display panel 20. The mounting height of the display panel 20 is usually set with reference to the average height of public users, for example, in a range of 1.6-1.8m.

It should be understood that although the description is described according to the embodiments, not every embodiment only includes one independent technical solution, that such a description manner is only for the sake of clarity, that those skilled in the art should take the description as an integral part.

The detailed descriptions set forth above are merely specific illustrations of feasible embodiments of the present invention, and are not intended to limit the scope of protection of the present invention, which is defined by the appended claims.

## Claims

1. A refrigerator door body, comprising a main body (10), wherein the refrigerator door body further comprises a camera (32) mounted on the main body (10) and configured to obtain an image in front of the main body (10), and an extension direction of an optical axis of the camera (32) at the front side of the main body is downwardly inclined relative to a horizontal direction, wherein the refrigerator door body further comprises a mounting base (30) provided on the main body (10), and the mounting base (30) has a mounting portion for mounting the camera (32) and defining the extension direction of the optical axis of the camera (32);
wherein the mounting portion is a receiving groove (300) that receives the camera (32) and exposes a front surface of the camera (32), the receiving groove (300) is fixedly arranged to the main body (10), and an inner wall of the receiving groove (300) has a portion that is in close contact with at least part of an outer wall of the camera (32) to define the extension direction of the optical axis of the camera (32), the inner wall of the receiving groove (300) has a rear wall (3001) and a bottom wall (3002) which are arranged inclined, the rear wall (3001) is perpendicular to the bottom wall (3002);
wherein the camera (32) is a rectangular parallelepiped, the rear wall (3001) and the bottom wall (3002) are in close contact with the back surface and bottom surface of the camera (32), respectively;
**characterized in that**
the camera is adhered to the inner wall of the receiving groove;
wherein the mounting base (30) comprises a fixed frame fixedly connected to the main body (10) and a rotatable frame rotatably connected to the fixed frame, and the mounting portion is located on the rotatable frame.

2. The refrigerator door body according to claim 1, wherein the inner wall of the receiving groove (300) further has a portion which is in close contact with a left side wall and a right side wall of the camera (32).

3. The refrigerator door body according to any of claims 1-2, wherein an angle by which the extension direction of the optical axis of the camera (32) at the front side of the main body (10) is downwardly inclined relative to the horizontal direction is in a range of 10-20°.

4. The refrigerator door body according to any of claims 1-2, wherein the door body further has a display panel (20) fixed on the front side of the main body (10), and a mounting height of the camera (32) is not lower than the mounting height of the display panel (10).

5. A refrigerator, comprising a cabinet, wherein the refrigerator further comprises the refrigerator door body according to any of claims 1-4.

## Patentansprüche

1. Kühlschranktürkörper mit einem Hauptkörper (10), wobei der Kühlschranktürkörper ferner eine Kamera (32) aufweist, die an dem Hauptkörper (10) montiert und dazu eingerichtet ist, ein Bild vor dem Hauptkörper (10) zu erhalten, und wobei eine Erstreckungsrichtung einer optischen Achse der Kamera (32) an der Vorderseite des Hauptkörpers relativ zu einer horizontalen Richtung nach unten geneigt ist, wobei der Kühlschranktürkörper ferner eine Montagebasis (30) aufweist, die an dem Hauptkörper (10) bereitgestellt ist, und die Montagebasis (30) einen Montageabschnitt zum Montieren der Kamera (32) und Definieren der Erstreckungsrichtung der optischen Achse der Kamera (32) aufweist;
wobei der Montageabschnitt eine Aufnahmevertiefung (300) ist, die die Kamera (32) aufnimmt und eine Vorderseite der Kamera (32) freilegt, wobei die Aufnahmevertiefung (300) fest an dem Hauptkörper (10) angeordnet ist, und eine Innenwand der Aufnahmevertiefung (300) einen Abschnitt aufweist, der in engem Kontakt mit mindestens einem Teil einer Außenwand der Kamera (32) steht, um die Erstreckungsrichtung der optischen Achse der Kamera (32) zu definieren, wobei die Innenwand der Aufnahmevertiefung (300) eine Rückwand (3001) und eine Bodenwand (3002) aufweist, die geneigt angeordnet sind, wobei die Rückwand (3001) senkrecht zu der Bodenwand (3002) ist;
wobei die Kamera (32) ein rechteckiges Parallelepiped ist, wobei die Rückwand (3001) und die Bodenwand (3002) jeweils in engem Kontakt mit der Rückseite und der Unterseite der Kamera (32) stehen;
**dadurch gekennzeichnet, dass** die Kamera an die Innenwand der Aufnahmevertiefung geklebt ist;
wobei die Montagebasis (30) einen festen Rahmen, der fest mit dem Hauptkörper (10) verbunden ist, und einen drehbaren Rahmen aufweist, der drehbar mit dem festen Rahmen verbunden ist, und wobei sich der Montageabschnitt an dem drehbaren Rahmen befindet.

2. Kühlschranktürkörper nach Anspruch 1, wobei die Innenwand der Aufnahmevertiefung (300) ferner einen Abschnitt aufweist, der in engem Kontakt mit einer linken Seitenwand und einer rechten Seitenwand der Kamera (32) steht.

3. Kühlschranktürkörper nach einem der Ansprüche 1 bis 2, wobei ein Winkel, um den die Erstreckungsrichtung der optischen Achse der Kamera (32) an der Vorderseite des Hauptkörpers (10) relativ zu der horizontalen Richtung nach unten geneigt ist, in einem Bereich von 10° bis 20° liegt.

4. Kühlschranktürkörper nach einem der Ansprüche 1 bis 2, wobei der Kühlschranktürkörper ferner eine Anzeigetafel (20) aufweist, die an der Vorderseite des Hauptkörpers (10) befestigt ist, und eine Montagehöhe der Kamera (32) nicht niedriger als die Montagehöhe der Anzeigetafel (10) ist.

5. Kühlschrank, mit einem Gehäuse, wobei der Kühlschrank ferner den Kühlschranktürkörper nach einem der Ansprüche 1 bis 4 aufweist.

## Revendications

1. Corps de porte de réfrigérateur, comprenant un corps principal (10), dans lequel le corps de porte de réfrigérateur comprend en outre une caméra (32) montée sur le corps principal (10) et configurée pour obtenir une image devant le corps principal (10), et une direction d'extension d'un axe optique de la caméra (32) sur le côté avant du corps principal est inclinée vers le bas par rapport à une direction horizontale, dans lequel le corps de porte de réfrigérateur comprend en outre une base de montage (30) prévue sur le corps principal (10), et la base de montage (30) présente une partie de montage pour monter la caméra (32) et définir la direction d'extension de l'axe optique de la caméra (32) ;
dans lequel la partie de montage est une rainure de réception (300) qui reçoit la caméra (32) et expose une surface avant de la caméra (32), la rainure de réception (300) est disposée de manière fixe sur le corps principal (10), et une paroi intérieure de la rainure de réception (300) présente une partie qui est en contact étroit avec au moins une partie d'une paroi extérieure de la caméra (32) pour définir la direction d'extension de l'axe optique de la caméra (32), la paroi intérieure de la rainure de réception (300) présente une paroi arrière (3001) et une paroi inférieure (3002) qui sont disposées de manière inclinée, la paroi arrière (3001) est perpendiculaire à la paroi inférieure (3002) ;
dans lequel la caméra (32) est un parallélépipède rectangle, la paroi arrière (3001) et la paroi inférieure (3002) sont respectivement en contact étroit avec la surface arrière et la surface inférieure de la caméra (32) ;
**caractérisé en ce que**
la caméra est collée à la paroi intérieure de la rainure de réception ;
dans lequel la base de montage (30) comprend un cadre fixe relié de manière fixe au corps principal (10) et un cadre rotatif relié de manière rotative au cadre fixe, et la partie de montage est située sur le cadre rotatif.

2. Corps de porte du réfrigérateur selon la revendication 1, dans lequel la paroi intérieure de la rainure de réception (300) comporte en outre une partie qui est en contact étroit avec une paroi latérale gauche et une paroi latérale droite de la chambre (32).

3. Corps de porte du réfrigérateur selon l'une quelconque des revendications 1-2, dans lequel l'angle par lequel la direction d'extension de l'axe optique de la caméra (32) sur la face avant du corps principal (10) est inclinée vers le bas par rapport à la direction horizontale est compris entre 10 et 20°.

4. Corps de porte du réfrigérateur selon l'une quelconque des revendications 1-2, dans lequel le corps de porte comporte en outre un panneau d'affichage (20) fixé sur la face avant du corps principal (10), et la hauteur de montage de la caméra (32) n'est pas inférieure à la hauteur de montage du panneau d'affichage (10).

5. Réfrigérateur, comprenant une armoire, dans lequel le réfrigérateur comprend en outre le corps de porte du réfrigérateur selon l'une quelconque des revendications 1 à 4.
